# EUROPÄISCHE PATENTSCHRIFT

(11) **EP 2 843 194 B1**
(45) Veröffentlichungstag und Bekanntmachung des Hinweises auf die Patenterteilung: **30.10.2019**
(21) Anmeldenummer: 14179519.5
(22) Anmeldetag: 01.08.2014
(51) Int. Cl.: F01D 9/02, F01D 25/12, F04D 29/54, F02C 9/18, F01D 5/08

(54) **Strömungsmaschine mit einer Kühlvorrichtung des Verdichters**
gas engine with a cooling device of the compressor
Turbomachine avec un dispositif de refroidissement du compresseur

(30) Priorität: 03.09.2013 DE 102013217504
(43) Veröffentlichungstag der Anmeldung: 04.03.2015
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 2 256 294
- EP-A1- 2 447 543
- EP-A2- 0 235 642
- DE-A1-102009 021 384
- GB-A- 2 018 362

## Beschreibung

Die Arbeiten, die zu dieser Erfindung geführt haben, wurden gemäß der *Finanzhilfevereinbarung* Nr. **283216 (LEMCOTEC)** im Zuge des Siebten Rahmenprogramms der Europäischen Union **(*FP7*/*2007-2013*)** für EU_FP7/4_LEMCOTEC gefördert.

Die Erfindung betrifft eine Strömungsmaschine nach dem Oberbegriff des Patentanspruchs 1. EP 2447 543 A1 offenbart die technischen Merkmale vom Oberbegriff vom unabhängigen Anspruch 1.

Zur Erniedrigung von Bauteiltemperaturen im Bereich der letzten Verdichterstufe und auch eines sich der Verdichterstufe anschließenden Rotorwellenabschnittes wird bevorzugterweise Kühlluft aus einem Luftverteilerrraum zwischen einem Austrittsdiffusor des Verdichters und einer jeweiligen Brennkammer eingeblasen, anstatt die Kühlluft aus Grenzschichten im Strömungskanal des Verdichters im Bereich von Innendeckbändern zu verwenden. Die Zuführung der Kühlluft in eine Kavität aus dem Bereich vor der Brennkammer erfolgt herkömmlicherweise durch mehrere hintereinander angeordnete Zwischenkammern des Austrittsdiffusors, die miteinander in Fluidverbindung stehen. Nachteilig an dieser Kühlluftführung ist jedoch, dass durch die Vielzahl von Zwischenkammern die Kühlluft einen signifikanten Druckverlust erfährt. Wenn zudem radiale Versorgungsleitungen wie Sperrluft oder Ölleitungen eine Zwischenkammer queren, wird der auf die Kühlluft wirkende Druckverlust verstärkt. Zudem können im Bereich von Eintritts- und Austrittsstellen der Versorgungsleitungen durch die Zwischenkammer Leckagen auftreten.

Aufgabe der Erfindung ist es, eine Strömungsmaschine mit eine Kühlvorrichtung zum Zuführen von Kühlluft aus einem Luftverteilerraum zwischen einem Austrittsdiffusor eines Verdichters und zumindest einer Brennkammer auf einen Verdichterbereich zu schaffen, die die vorgenannten Nachteile beseitigt und bei gleichen Bauteiltemperaturen ein höheres Gesamtdruckverhältnis ermöglicht.

Diese Aufgabe wird gelöst durch eine Strömungsmaschine mit den Merkmalen des Patentanspruchs 1.

Eine erfindungsgemäße Strömungsmaschine hat eine Kühlvorrichtung zum Zuführen von Kühlluft aus einem Luftverteilerraum zwischen einem Austrittsdiffusor eines Verdichters und zumindest einer Brennkammer auf einen Verdichterbereich, wobei die Kühlvorrichtung Kühlluftrohre zum Führen der Kühlluft aus dem Luftverteilerraum in eine Kavität zwischen dem Austrittsdiffusor und einem Rotorabschnitt des Verdichters hat.

Durch die Kühlluftrohre erfolgt eine gezielte Kühlluftführung der Kühlluft aus dem Luftverteilerraum vor der Brennkammer in Richtung des zu kühlenden Verdichterbereichs, wodurch ein hoher Kühlluftdruck erhalten bleibt. Dies ermöglicht die Einstellung eines höheren Gesamtdruckverhältnisses bei gleichen Bauteiltemperaturen. Hierdurch kann der Wirkungsgrad der Strömungsmaschine gesteigert werden. Bevorzugterweise verlaufen die Kühlluftrohre in Axialrichtung der Strömungsmaschine. Die Erfindung eignet sich insbesondere beispielsweise zur Zuführung von Kühlluft bei Strömungsmaschinen zur letzten Verdichterstufe, bei denen beispielsweise eine Lagerkammer des Hochdruckrotors unter bzw. radial innen zur zumindest einen Brennkammer angeordnet ist.

Wenn im Bereich des Austrittsdiffusors radiale Versorgungsleitungen wie Sperrluft, Ölleitungen und dergleichen vorgesehen sind, ist es zur Vermeidung von gegenseitigen Beschädigungen der Versorgungsleitungen und der Kühlluftrohre vorteilhaft, wenn die Versorgungsleitungen und die Kühlluftrohre in Umfangsrichtung der Strömungsmaschine betrachtet voneinander beabstandet sind.

Die Position der Kühlluftrohre in Umfangsrichtung lässt sich genau definieren, sowie die Montage der Kühlluftrohre lässt sich einfach gestalten, wenn diese in Bohrungen des Austrittsdiffusors eingesetzt sind bzw. werden. Zudem ermöglicht diese Art der Positionierung, dass Passungen zwischen den Kühlluftrohren und den Bohrungen derart eingestellt werden können, dass Leckagen in den Bohrungsbereichen verhindert werden. Zur axialen Sicherung der Kühlluftrohre ist es vorteilhaft, wenn diese mit einem Kragen in einer Aufnahme zwischen zwei Radialwandungen von benachbarten Diffusorschaufelreihen angeordnet sind. Hierdurch werden die Kühlluftrohre automatisch bei der Montage des Austrittsdiffusors in Axialrichtung lagegesichert.

Zur gleichmäßigen Kühlung des Verdichterbereichs ist es vorteilhaft, wenn die Kühlluftrohre einen identischen Innendurchmesser aufweisen und gleichmäßig über den Umfang des Austrittsdiffusors verteilt sind. Durch die gleichmäßige Kühlung des Verdichterbereiches in Umfangsrichtung werden Wärmespannungen in benachbarten Bauteilbereichen aufgrund von unterschiedlichen Bereichstemperaturen verhindert.

Bei einem Ausführungsbeispiel münden die Kühlluftrohre in einen vom Austrittsdiffusor radial außen begrenzten Hohlraum, der über Austrittsöffnungen zur Kavität hin geöffnet ist. Durch die Führung der Kühlluft durch den Hohlraum erfolgt automatisch eine rückseitige Kühlung des Austrittsdiffusors in diesem Bereich.

Bevorzugterweise sind die Auslassöffnungen in Umfangsrichtung der Strömungsmaschine gewinkelt angeordnet. Hierdurch wird eine Drallwirkung erzielt.

Zusätzlich oder alternativ können die Auslassöffnungen eine Engstelle für die Kühlluft bilden. Engstelle bedeutet, dass die Auslassöffnungen über den gesamten Kühlluftpfad betrachtet den kleinsten Strömungsquerschnitt bzw. Innenquerschnitt aufweisen. Hierdurch wird eine beschleunigte Kühlluftströmung mit geringer Relativgeschwindigkeit zum Rotor erreicht, was hier eine zusätzliche Kühlung bewirkt. Der Druck fällt quasi an den Austrittsöffnungen ab.

Der Hohlraum kann radial innen von einem am Austrittsdiffusor montierten Dichtungsring begrenzt sein. Hierdurch erfolgt nicht nur eine bereichsweise Kühlung des Austrittsdiffusors, sondern auch eine bereichsweise rückseitige Kühlung des Dichtungsrings.

Sonstige vorteilhafte Ausführungsbeispiele der Erfindung sind Gegenstand weiterer Unteransprüche.

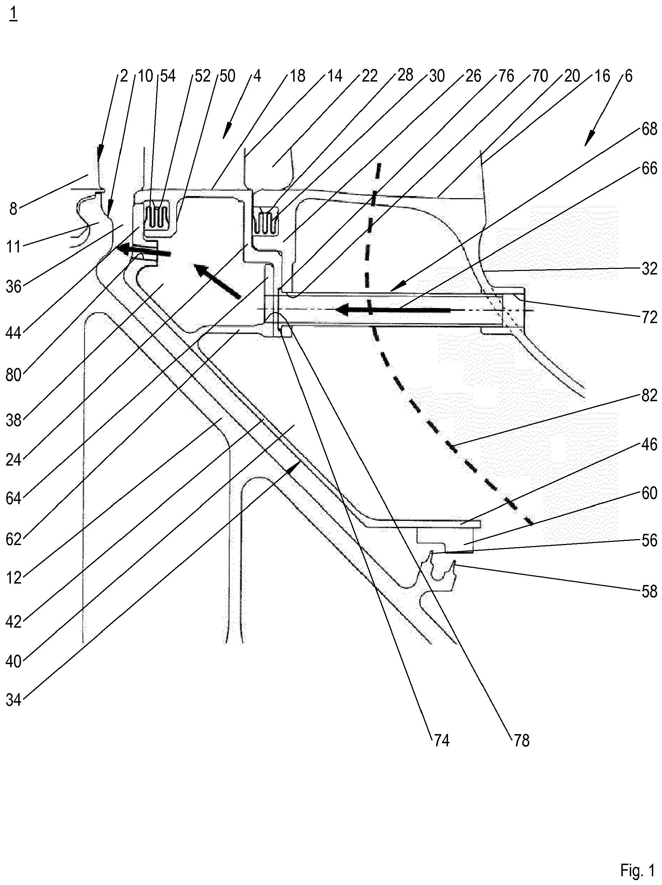

Im Folgenden wird ein bevorzugtes Ausführungsbeispiel der Erfindung anhand einer stark vereinfachten schematischen Darstellung näher erläutert. Die einzige Figur 1 zeigt einen Längsschnitt durch eine Strömungsmaschine im Bereich eines einem Verdichter nachgeschalteten Austrittsdiffusors.

Gemäß dem Längsschnitt in Figur 1 hat ein Ausführungsbeispiel einer erfindungsgemäßen Strömungsmaschine einen Verdichter 2, einen Austrittsdiffusor 4 und einen Luftverteilerraum 6. Die Strömungsmaschine 1 ist beispielsweise eine stationäre Gasturbine und insbesondere ein Flugtriebwerk. Der Austrittsdiffusor 4 ist in Strömungsrichtung eines die Strömungsmaschine 1 im Wesentlichen in Axialrichtung durchströmenden Hauptstroms betrachtet zwischen dem Verdichter 2 und dem Luftverteilerraum 6 angeordnet. Der Austrittsdiffusor 4 ist somit unmittelbar dem Verdichter 2 nachgeschaltet. Der Luftverteilerraum 6 ist unmittelbar zumindest einer Brennkammer des Verbrennungsbereichs vorgeschaltet und dient insbesondere zur gleichmäßigen Verteilen des aus dem Austrittsdiffusor 4 austretenden verdichteten Hauptstroms in Umfangsrichtung.

Aus Gründen der Übersichtlichkeit ist von dem Verdichter 2 lediglich eine Laufschaufelreihe 8 angedeutet, die in Strömungsrichtung betrachtet hier letzte Laufschaufelreihe des Verdichters 2 ist. Die Laufschaufelreihe 2 bildet ein Teil eines Rotors und ist an einer Rotorwelle 10 angeordnet, die zur Aufnahme der Laufschaufelreihe 8 einen Ringabschnitt 11 mit einer Umfangsnut zum Einsetzen der Laufschaufeln hat. Zudem hat die Rotorwelle 10 einen sich dem Ringabschnitt 11 anschließenden und gemäß der Darstellung unter den Austrittsdiffusor 4 erstreckenden konusartig verjüngten Rotorabschnitt 12.

Der Austrittsdiffusor 4 hat in dem gezeigten Ausführungsbeispiel zwei Leitschaufelreihen bzw. Diffusorschaufelreihen 14, 16, die mit jeweils einem Innendeckbandring 18, 20 einen von dem Hauptstrom durchströmten ringartigen Hauptstromkanal 22 radial innen begrenzen.

Die Leitschaufelreihen 14, 16 befinden sich in Axialrichtung der Strömungsmaschine in Anlage miteinander und haben hierzu jeweils eine Radialwandung 24, 26, die sich von den Innendeckbandringen 18, 20 radial nach innen erstreckt. Um einen Hauptstromeinzug zwischen den Radialwandungen 24, 26 hindurch aus dem Hauptstromkanal 22 zu verhindern, ist in einer Dichtkammer 28 der Radialwandung 26 der hinteren Leitschaufelreihe 16 eine Dichtung 30, beispielsweise eine W-förmige Blechdichtung, eingesetzt.

Die hintere Leitschaufelreihe 16 hat zudem eine hintere Bogenwandung 32, die sich radial nach innen von dem Innendeckbandring 20 erstreckt und den Luftverteilerraum 6 stromaufwärts in Axialrichtung begrenzt.

Die Strömungsmaschine 1 hat ferner einen radial innen zum Austrittsdiffusor 4 angeordneten Dichtungsring 34, der eine Kavität 36 zur Rotorwelle 10 und insbesondere zum Ringabschnitt 11 und zum konusartigen Rotorabschnitt 12 begrenzt. Im Zusammenwirken mit den Innendeckbändern 18, 20 und den Radialwandungen 24, 26 bildet der Dichtungsring 34 einen Hohlraum 38 im Bereich der vorderen Leitschaufelreihe 14 des Austrittsdiffusors 4 und einen Zwischenraum 40 im Bereich der hinteren Leitschaufelreihe 16 des Austrittsdiffusors 4.

Der Dichtungsring 34 kann einteilig sein oder sich aus einer Vielzahl von Dichtsegmenten zusammensetzen. Es hat einen konusartigen Grundkörper 42, der sich nahezu parallel zum Rotorabschnitt 12 erstreckt und endseitig einen radial außenliegenden Radialabschnitt 44 und einen radial innenliegenden Axialabschnitt 46 aufweist. Der Radialabschnitt 44 begrenzt mit einem sich radial nach innen von dem Innendeckbandring 18 erstreckenden Hakenabschnitt 50 eine Dichtkammer 52, in der zur Verhinderung eines Hauptstromeinzugs in den Hohlraum 38 eine Dichtung 54, beispielweise eine W-förmige Blechdichtung, eingesetzt ist. Der axiale Abschnitt 46 ist im Bereich von sich im Wesentlichen radial nach außen erstreckenden Dichtstegen 56, 58 des Rotorabschnittes 12 angeordnet und weist zum Zusammenwirken mit den Dichtstegen 56, 58 bzw. zum radial inneren Abdichten der Kavität 36 ein stufenförmiges Dichtelement 60 wie eine metallische Honigwabe auf.

Zwischen dem Radialabschnitt 44 und dem Axialabschnitt 46 erstreckt sich von dem Grundkörper 42 stromabwärts ein axialer Zwischenabschnitt 62, der in eine radial nach außen gerichteten Endabschnitt 64 übergeht. Der Zwischenabschnitt 62, der Endabschnitt 64, die Radialwandung 24, das Innendeckbandring 18, der Radialabschnitt 44 sowie ein zwischen dem Zwischenabschnitt 62 und dem Radialabschnitt 44 verlaufender oberer Bereich des Grundkörpers 42 begrenzen den Hohlraum 38. Der Zwischenraum 40 wird von der Bogenwandung 32, dem Innendeckbandring 20, der Radialwandung 26, dem Zwischenabschnitt 62, einem unteren Bereich des Grundkörpers 42 sowie dem Axialabschnitt 46 begrenzt.

Aus Gründen der Übersichtlichkeit sind der obere Bereich des Grundkörpers 42 zwischen dem Radialabschnitt 44 und dem Zwischenabschnitt 62 sowie der untere Bereich des Grundkörpers 42 zwischen dem Zwischenabschnitt 62 und dem Axialabschnitt 46 nicht beziffert. Die Begriffe "oben" und "unten" beziehen sich dabei auf die Ausrichtung in Figur 1.

Zum Zuführen von Kühlluft 66 aus dem Luftverteilerraum 6 und somit aus einem Bereich unmittelbar vor der zumindest einen Brennkammer auf die hier letzte Laufschaufelreihe des Verdichters bzw. auf einen Bereich der letzten Verdichterstufe weist die Strömungsmaschine 1 eine Kühlvorrichtung auf, die eine Vielzahl von Kühlluftrohren 68 umfasst.

Die Kühlluftrohre 68 sind in Umfangsrichtung der Strömungsmaschine 1 gleichmäßig voneinander beabstandet. Sie sind bevorzugterweise gerade und verlaufen in Axialrichtung. Bevorzugterweise haben sie zudem einen gleichen konstanten Innenquerschnitt. Selbstverständlich können sie untereinander und/oder einzeln variierende Innenquerschnitte aufweisen. Selbstverständlich können sich auch schräg zur Axialrichtung verlaufen, zumindest eine Krümmung und/oder variierende Innendurchmesser aufweisen. Sie sind jeweils in ein Bohrungspaar bestehend aus zwei zueinander fluchtenden Bohrungen 70, 72 eingesetzt, wobei die vordere Bohrung 70 die Radialwandung 26 der hinteren Leitschaufelreihe 16 durchsetzt und die hintere Bohrung 72 die Bogenwandung 32 der hinteren Leitschaufelreihe 16 durchsetzt. Wie in dem hier gezeigten Ausführungsbeispiel gezeigt, kann die hintere Bohrung 72 jeweils stutzenartig und somit in Axialrichtung verlängert ausgebildet sein.

Zur axialen Lagesicherung der Kühlluftrohre 68 weisen diese jeweils einen Kragen 74 auf, mit dem sie zwischen den Radialwandungen 24, 26 der Leitschaufelreihen 14, 16 angeordnet sind. Zur Aufnahme des jeweiligen Kragens 74 sind in der Radialwandung 24 der vorderen Leitschaufelreihe 14 korrespondierende Ausnehmungen 76 eingebracht. Die Kühlluftrohre 68 überbrücken somit den Zwischenraum 40 und ermöglichen eine gezielte und gerichtete Entnahme der Kühlluft aus dem Luftverteilerraum 6.

Zur Führung der Kühlluft durch den Hohlraum 38 sind in dem radialen Endabschnitt 64 des Dichtungsrings 34 jeweils eine zum Bohrungspaar und somit zum jeweiligen Kühlluftrohr 68 fluchtende Einlassöffnung 78 und in dem Radialabschnitt 44 des Dichtungsrings 34 mehrere axiale Auslassöffnungen 80 eingebracht, die unmittelbar in die Kavität 36 münden. In dem hier gezeigten Ausführungsbeispiel münden die Auslassöffnungen 80 gegenüberliegend zum Ringabschnitt 11 in die Kavität 36. Die Auslassöffnungen 80 sind vorzugsweise in Umfangsrichtung eingebracht und bevorzugterweise Bohrungen mit einem konstanten Innenquerschnitt. Dieser ist kleiner als die zuführenden Querschnitte des Kühlluftpfades wie die Innenquerschnitte der Kühlluftrohre 68 und die Einlassöffnungen 78. Die Austrittsöffnungen 80 bilden somit trotz ihres konstanten Innenquerschnitts eine Engstelle, wodurch eine Düsenwirkung erzielt und die aus den Austrittsöffnungen 80 austretende Kühlluft 66 beschleunigt wird. Es wird eine beschleunigte Kühlluftströmung mit geringer Relativgeschwindigkeit zum Rotor erreicht, was hier eine zusätzliche Kühlung bewirkt. Selbstverständlich können die Austrittsöffnungen 88 selbst durch variierende Innenquerschnitte als Düse ausgebildet sein.

Die Kühlluft 66 strömt in die Kühlluftrohre 68 ein, tritt über die Einlassöffnungen 78 in den Hohlraum 38 ein und verlässt diesen über die Auslassöffnungen 80 in die Kavität 36. Dabei strömt ein Teilstrom der Kühlluft entlang des Ringabschnitts 11 radial nach außen in den Hauptstromkanal 22 und verhindert somit einen Hauptstromeinzug in die Kavität 36. Dieser radial nach außen strömende Teilstrom wirkt somit quasi als Sperrluft. Ein anderer Teilstrom der Kühlluft strömt entlang des konusartigen Rotorabschnitts 12 radial nach innen in Richtung der Dichtstege 56, 58 bzw. des Dichtelements 60 und kühlt somit den Rotorabschnitt 12 und den Dichtungsring 34 bzw. dessen Grundkörper 42.

Um eine gegenseitige Beschädigung der Kühlluftrohre mit radialen den Zwischenraum 40 kreuzenden Versorgungsleitungen 82 wie z.B. Sperrluftleitungen oder Ölleitungen zu verhindern, sind die Kühlluftrohre 68 und die Versorgungsleitung 82 in Umfangsrichtung voneinander beabstandet.

Offenbart ist eine Strömungsmaschine mit einer Kühlvorrichtung zum Zuführen von Kühlluft auf einen Verdichterbereich aus einem Luftverteilerraum, der zwischen einem Austrittsdiffusor eines Verdichters und einer Brennkammer angeordnet ist, wobei die Kühlvorrichtung Kühlluftrohre zum Zuführen der Kühlluft aus dem Luftverteilerraum in eine Kavität zwischen dem Austrittsdiffusor und einem Rotorabschnitt des Verdichters hat.

### Bezugszeichenliste

- 1: Strömungsmaschine
- 2: Verdichter
- 4: Austrittsdiffusor
- 6: Luftverteilerraum
- 8: Laufschaufelreihe
- 10: Rotorwelle konusartig verjüngt
- 11: Ringabschnitt
- 12: Rotorabschnitt
- 14: Leitschaufelreihe
- 16: Leitschaufelreihe
- 18: Innendeckb andring
- 20: Innendeckb andring
- 22: Hauptstromkanal
- 24: Radialwandung
- 26: Radialwandung
- 28: Dichtkammer
- 30: Dichtung
- 32: Bogenwandung
- 34: Dichtungsring
- 36: Kavität
- 38: Hohlraum
- 40: Zwischenraum
- 42: Grundkörper
- 44: Radialabschnitt
- 46: Axialabschnitt
- 50: Hakenabschnitt
- 52: Dichtkammer
- 54: Dichtung
- 56: Dichtsteg
- 58: Dichtsteg
- 60: Dichtelement
- 62: Zwischenabschnitt
- 64: Endabschnitt
- 66: Kühlluft
- 68: Kühlluftrohr axial
- 70: Bohrung
- 72: Bohrung
- 74: Kragen
- 76: Ausnehmung
- 78: Einlassöffnung
- 80: Auslassöffnung
- 82: Versorgungsleitung

## Patentansprüche

1. Strömungsmaschine (1), mit einer Kühlvorrichtung zum Zuführen von Kühlluft aus einem Luftverteilerraum (6) zwischen einem Austrittsdiffusor (4) eines Verdichters (2) und zumindest einer Brennkammer auf einen Verdichterbereich, wobei die Kühlvorrichtung Kühlluftrohre (68) zum Führen der Kühlluft aus dem Luftverteilerraum (6) in eine Kavität (36) zwischen dem Austrittsdiffusor (4) und einem Rotorabschnitt (11, 12) des Verdichters (2) hat, wobei die Kühlluftrohre (68) in einen vom Austrittsdiffusor (4) radial außen begrenzten Hohlraum (38) münden, der über Austrittsöffnungen (80) zur Kavität (36) geöffnet ist, **dadurch gekennzeichnet, dass** der Hohlraum (38) radial innen von einem am Austrittsdiffusor (4) montierten Dichtungsring (42) begrenzt ist.

2. Strömungsmaschine nach Anspruch 1, wobei die Kühlluftrohre (68) von radialen Versorgungsleitungen (82) in Umfangsrichtung der Strömungsmaschine (1) beabstandet sind.

3. Strömungsmaschine nach Anspruch 1 oder 2, wobei die Kühlluftrohre (68) in Bohrungen (70, 72) des Austrittsdiffusors (4) eingesetzt sind.

4. Strömungsmaschine nach Anspruch 3, wobei die Kühlluftrohre (68) mit jeweils einem Kragen (74) in einer Aufnahme (76) zwischen zwei Radialwandungen (24, 26) von benachbarten Diffusorschaufelreihen (14, 16) angeordnet sind.

5. Strömungsmaschine nach einem der vorhergehenden Ansprüche, wobei die Kühlluftrohre (68) einen identischen Innendurchmesser aufweisen und gleichmäßig über den Umfang des Austrittsdiffusors (4) verteilt sind.

6. Strömungsmaschine nach einem der vorhergehenden Ansprüche, wobei die Auslassöffnungen (80) in Umfangsrichtung der Strömungsmaschine (1) gewinkelt angeordnet sind.

7. Strömungsmaschine nach einem der vorhergehenden Ansprüche, wobei die Auslassöffnungen (80) eine Engstelle für die Kühlluft (66) bilden.

## Claims

1. Turbomachine (1), comprising a cooling device for supplying cooling air from an air distribution space (6), between an outlet diffuser (4) of a compressor (2) and at least one combustion chamber, to a compressor region, the cooling device having cooling air pipes (68) for guiding the cooling air from the air distribution space (6) into a cavity (36) between the outlet diffuser (4) and a rotor portion (11, 12) of the compressor (2), the cooling air pipes (68) opening into a hollow space (38) which is radially delimited on the outside by the outlet diffuser (4) and which is open to the cavity (36) via outlet openings (80), **characterized in that** the hollow space (38) is radially delimited on the inside by a sealing ring (42) which is mounted on the outlet diffuser (4).

2. Turbomachine according to claim 1, wherein the cooling air pipes (68) are spaced apart from radial supply lines (82) in the circumferential direction of the turbomachine (1).

3. Turbomachine according to either claim 1 or claim 2, wherein the cooling air pipes (68) are inserted into bores (70, 72) of the outlet diffuser (4).

4. Turbomachine according to claim 3, wherein the cooling air pipes (68) are each arranged, by means of a collar (74), in a receptacle (76) between two radial walls (24, 26) of adjacent diffuser blade rows (14, 16).

5. Turbomachine according to any of the preceding claims, wherein the cooling air pipes (68) have an identical inner diameter and are evenly distributed over the circumference of the outlet diffuser (4).

6. Turbomachine according to any of the preceding claims, wherein the outlet openings (80) are arranged at an angle in the circumferential direction of the turbomachine (1).

7. Turbomachine according to any of the preceding claims, wherein the outlet openings (80) form a constriction for the cooling air (66).

## Revendications

1. Turbomachine (1) comportant un dispositif de refroidissement destiné à acheminer de l'air de refroidissement provenant d'une chambre de distribution d'air (6) entre un diffuseur de sortie (4) d'un compresseur (2) et au moins une chambre de combustion vers une zone de compresseur, le dispositif de refroidissement comprenant des tubes d'air de refroidissement (68) destinés à conduire l'air de refroidissement de la chambre de distribution d'air (6) à une cavité (36) entre le diffuseur de sortie (4) et une section de rotor (11, 12) du compresseur (2), les tubes d'air de refroidissement (68) débouchant dans un espace creux (38) délimité radialement à l'extérieur par le diffuseur de sortie (4) et ouvert à la cavité (36) par l'intermédiaire des ouvertures de sortie (80), **caractérisée en ce que** la cavité (38) est délimitée radialement à l'intérieur par un anneau d'étanchéité (42) monté sur le diffuseur de sortie (4),

2. Turbomachine selon la revendication 1, dans laquelle les tubes d'air de refroidissement (68) sont espacés par des conduites d'alimentation radiales (82) dans le sens circonférentiel de la turbomachine (1).

3. Turbomachine selon la revendication 1 ou 2, dans laquelle les tubes d'air de refroidissement (68) sont insérés dans des alésages (70, 72) du diffuseur de sortie (4).

4. Turbomachine selon la revendication 3, dans laquelle les tubes d'air de refroidissement (68) sont respectivement disposés avec une collerette (74) dans un réceptacle (76) se trouvant entre deux parois radiales (24, 26) de rangées d'aubes de diffuseur (14, 16) adjacentes.

5. Turbomachine selon l'une des revendications précédentes, **caractérisée en ce que** les tubes d'air de refroidissement (68) ont un diamètre intérieur identique et **en ce qu'**ils sont répartis uniformément sur la circonférence du diffuseur de sortie (4).

6. Turbomachine selon l'une des revendications précédentes, dans laquelle les ouvertures de sortie (80) sont inclinées dans le sens circonférentiel de la turbomachine (1).

7. Turbomachine selon l'une des revendications précédentes, dans laquelle les ouvertures de sortie (80) forment un étranglement pour l'air de refroidissement (66).
